# EUROPEAN PATENT SPECIFICATION

(11) **EP 2 532 707 B1**
(45) Date of publication and mention of the grant of the patent: **25.05.2016**
(21) Application number: 11004674.5
(22) Date of filing: 08.06.2011
(51) Int. Cl.: C08L 23/08, C08K 3/26, H01B 3/44

(54) **Flame retardant polymer composition**
Flammenhemmende Polymerzusammensetzung
Composition de polymère ignifuge

(43) Date of publication of application: 12.12.2012
(73) Proprietor: Borealis AG, 1220 Vienna (AT)
(72) Inventor: PRIETO, Oscar, SE-416 72 Göteborg (SE); LOYENS, Wendy, SE-444 52 Stenungsund (SE); COSTA, Francis, AT - 4020 Linz (AT); KARLSSON, Linus, SE-416 62 Göteborg (SE); GREN, Martin, SE-438 36 Landvetter (SE)
(74) Representative: Kador & Partner

(56) References cited:
- WO-A1-02/26879
- WO-A1-2006/132452
- US-A- 5 889 087
- US-A1- 2005 137 306
- US-A1- 2010 069 545

## Description

The present invention relates to a flame retardant polymer composition, to a wire or cable comprising said flame retardant polymer composition, and to the use of said composition for the production of a layer, preferably a jacketing layer of a wire or cable.

A typical electrical power cable or wire generally comprises one or more conductors in a cable core, which is surrounded by one or more insulation layers or sheaths of polymeric material. The core is typically copper or aluminium but it may also be non-metallic, surrounded by a number of different polymeric layers, each serving a specific function, e.g. a semi-conducting shield layer, an insulation layer, a metallic tape shield layer and a polymeric jacket. Each layer can provide more than one function. For example, low voltage wire or cable are often surrounded by a single polymeric layer that serves as both an insulating layer and an outer jacket, while medium to extra-high voltage wire and cable are often surrounded by at least separate insulating and jacket layers. A power cable may for example be surrounded by a first polymeric semiconducting shield layer, a polymeric insulating layer, a second polymeric semiconducting shield layer, a metallic tape shield, and a polymeric jacket.

A wide variety of polymeric materials have been utilized as electrical insulating and semiconducting shield materials for power cables. Such polymeric materials in addition to having suitable dielectric properties must also be enduring and must substantially retain their initial properties for effective and safe performance over many years of service. Such materials have also to meet stringent safety requirements as laid down in international standards. In particular, single cable, or bundle of cables, must not burn by itself or transmit fire; the combustion gases of a cable must be as harmless as possible to humans, the smoke and combustion gases formed must not obscure escape routes or be corrosive.

Flame retardants are chemicals used in polymers that inhibit or resist the spread of fire. For improving the flame retardancy of polymers compositions to be used in wires or cables, compounds containing halides were first added to the polymer. However these compounds have the disadvantage that upon burning, hazardous and corrosive gases like hydrogen halides are liberated.

Then, one approach to achieve high flame retardant properties in halogen-free polymer compositions has been to add large amounts, typically 50 to 60 wt% of inorganic fillers such as hydrated and hydroxy compounds. Such fillers, which include Al(OH)₃ and Mg(OH)₂ decomposes endothermically at temperatures between 200 and 600°C, liberating inert gases. The drawback of using large amounts of fillers is the deterioration of the processability and the mechanical properties of the polymer composition.

Therefore a continued interest exists in identifying halogen-free polymer compositions that meet the flame retardant standard while still featuring superior mechanical properties. At the same time the polymer composition should be more efficiently and less expensively fabricated.

The polymer composition according to the present invention has the advantage of having essentially no emission of harmful gases and combining excellent flame retardant properties, very good mechanical properties, good processability, good flexibility and pressure deformation resistance.

The flame retardant polymer composition according to the invention as defined in claim 1.

According to a preferred embodiment the ethylene copolymer (A) is an ethylene methacrylate copolymer (EMA).

Preferably the ethylene copolymer (B) comprises co-monomer units derived from C₄ to C₁₂ α-olefin, more preferably from Cg to C₁₂ α-olefin. In one embodiment of the present invention the α-olefm is octene.

Preferably the ethylene copolymer (B) is present in an amount between 3 and 20 wt% of the total polymer composition, preferably between 7 and 15 wt%.

The halogen-free mineral filler (C) has preferably a decomposition temperature above 200°C.

The maleic anhydride modified ethylene homo-or copolymer (D) is preferably present in the composition in an amount of 1 to 10 wt% of the total polymer composition.

Preferably the co-monomer of the maleic anhydride modified ethylene homo- or copolymer (D) is an α-olefin. According to a preferred embodiment, maleic anhydride units are grafted onto an ethylene homo or copolymer backbone.

Preferably, the ethylene homo-or copolymer backbone is a low density polyethylene, linear low, medium or high density polyethylene and very low density polyethylene The composition may further comprising an ethylene copolymer (E) having a density between 0.912 and 0.940 g/cm³. Preferably the ethylene copolymer (E) comprises co-monomer units derived from C₃ to C₁₂ α-olefin.

Preferably the ethylene copolymer (E) is present in an amount between 1 and 7 wt%, more preferably 2 to 5 wt% of the total polymer composition.

According to a preferred embodiment the retardant polymer composition claims feature a hot pressure resistance/indentation below 50%.

In another aspect the present invention is directed to a wire or cable comprising the composition described above. Preferably the wire or cable comprises a jacketing layer comprising the composition described above. Conveniently said wire or cable is used in a building construction.

In a further aspect the present invention is directed to the use of the composition described above in the production of a layer of a wire or a cable.

The present invention is also directed to a process for producing the composition described above, said process comprising compounding the polymer composition at a temperature up to 235°C.

### Detailed description

The flame retardant polymer composition according to the present invention comprises an ethylene copolymer (A) comprising polar groups selected from the group consisting of acrylic acids, methacrylic acids, acrylates, methacrylates, acetates and vinyl acetates. More preferably, the polar groups are selected from the group consisting of alkyl acrylates, alkyl methacrylates, and vinyl acetates. Even more preferably, the polar groups are selected from the group consisting of C₁- to C₆-alkyl acrylates, C₁- to C₆-alkyl methacrylates, and vinyl acetates. Still more preferably, the polar groups are selected from the group consisting of C₁- to C₄-alkyl, such as methyl, ethyl, propyl or butyl acrylates or vinyl acetate.

For example, polar monomer units may be selected from the group of alkylesters of (meth)acrylic acid, such as methyl, ethyl and butyl(meth)acrylate and vinylacetate. In a particularly preferred embodiment (A) is an ethylene acrylate copolymer, in a more preferred embodiment (A) is an ethylene methyl acrylate copolymer (EMA).

Preferably, the ethylene copolymer (A) comprising polar groups is prepared by copolymerizing ethylene and at least a polar comonomer mentioned above. However, it may also be produced by grafting the polar group onto the homo- or copolymer backbone.

When the polar copolymer is prepared by copolymerizing ethylene with a polar comonomer, this is preferably effected in a high pressure process resulting in low density ethylene copolymer or in a low pressure process in the presence of any suitable catalyst, for example a chromium, Ziegler-Natta or single-site catalyst.

Preferably, component (A) has a polar comonomer content from 10 to 35 wt%, more preferably from 15 to 30 wt% or even more preferably from 15 to 25 wt%.

Preferably component (A) has a melt flow rate MFR (190°C, 2.16 kg) of 0.1 to 50 g/10 min, more preferably of 0.2 to 10 g/10 min and most preferably of 0.2 to 3.0 g/10 min.

In the composition of the invention, preferably the amount of component (A) is from 5 to 40 wt.% of the total polymer composition, more preferably is from 15 to 25 wt.% and most preferably is from 17 to 22 wt.%.

The polymer composition according to the invention further comprises a single site catalyst prepared ethylene copolymer (B) having a density between 0.860 and 0.910 g/cm³. Preferably the polyethylene (B) has a density between 0.870 and 0.905 g/cm³, more preferably between 0.875 and 0.900 g/cm³.

The ethylene copolymer (B) may be prepared in a low pressure process through the use of a class of highly active olefin catalysts known as metallocenes, preferably those based on group IV B transition metals, zirconium, titanium and hafnium.

The ethylene copolymer (B) conveniently comprises comonomer units derived from C₄ to C₁₂ α-olefin, more preferably from C₈ to C₁₂ α-olefin. Even more preferably the comonomer units of ethylene copolymer (B) consist of comonomer units derives from one or more C₄ to C₁₂ α-olefin, more preferably from C₈ to C₁₂ α-olefin. In one embodiment of the present invention the α-olefin is octene. By using octene the melting point of the copolymer (B) is increased and the stickiness decreased.

According to one embodiment of the present invention the polyethylene (B) has a melting point of at least 65°C and below 110°C.

The polyethylene (B) is preferably present in an amount between 3 and 20 wt% of the total polymer composition, preferably between 7 and 15 wt%.

The inventive flame retardant polymer composition further comprises a halogen-free mineral filler (C) comprising a huntite and/or a hydromagnesite. Huntite CaMg₃(CO₃)₄ and and hydromagnesite Mg₅(CO₃)₄(OH)₂.4H₂O are classified as carbonate minerals having no simple metal hydroxide structures like other mineral flame-retardants.

Endothermic decomposition of these compounds starts well above 200°C and liberates water steam and carbon dioxide and results in Ca and Mg oxide as solid end products. Fraction (C) is preferably coated.

The specific filler used in the composition of the invention allows compounding the polymer composition up to 235°C, which give a much larger processing window compared to the well know filler Al(OH)₃ which has a maximum compounding temperature of 180°C.

More preferably the halogen-free mineral filler (C) comprises a mixture of at least 20 wt% of the total polymer composition of huntite and hydromagnesite and even more preferably the halogen-free mineral filler (C) comprises a mixture of at least 20 wt% of the total polymer composition of huntite and at least 55 wt% of the total polymer composition of hydromagnesite.

The mineral filler is preferably present in the composition of the present invention in an amount of 30 to 80 wt%, preferably of 45 to 70 wt% and more preferably of 55 to 67 wt% of the total polymer composition.

The flame retardant polymer composition according to the invention further comprises a maleic anhydride modified ethylene homo- or copolymer (D) as coupling agent.

The term "modified" in the contest of the present invention means that component (D) may be produced by means of copolymerization of ethylene, maleic anhydride units and, optionally, further comonomers, or by grafting the maleic anhydride units onto ethylene homo- or copolymer backbone. More conveniently, maleic anhydride units are grafted onto the ethylene homo or copolymer backbone.

In case, the backbone, prior to grafting, is a ethylene copolymer, suitable co-monomers may comprise polar groups selected from the group consisting of acrylic acids, methacrylic acids, acrylates, methacrylates, acetates and vinyl esters or α-olefins. Preferably the co-monomer is an α-olefin. Preferably the α-olefin is selected from the group consisting of C₃ to C₁₂ α-olefin, more preferably from C₄ to C₈ α-olefin.

Preferably, the ethylene homo- or copolymer backbone is a low density polyethylene, linear low, medium or high density polyethylene and very low density polyethylene. According to a preferred embodiment the ethylene homo- or copolymer backbone is a low density polyethylene and mostly preferred is a linear low density polyethylene.

If however, component (D) is produced by means of copolymerization of ethylene, maleic anhydride units and further comonomers, said further comonomers may also comprise polar groups selected from the group consisting of acrylic acids, methacrylic acids, acrylates, methacrylates, acetates and vinyl esters or α-olefins. Preferably the co-monomer is an α-olefin. Preferably the α-olefin is selected from the group consisting of C₃ to C₁₂ α-olefin, more preferably from C₄ to C₈ α-olefin.

Preferred densities of component (D) are densities not higher than 930 g/cm³. Component (D) preferably has a density between 0.890 and 0.930 g/cm³, more preferably between 0.900 and 0.920 g/cm³.

Preferably, the amount of units derived from maleic anhydride in the maleic anhydride modified ethylene homo- or copolymer is from 0.5 to 48 wt%, more preferably from 1 to 5 wt%, most preferably from 2 to 4 wt%

It is preferred that the maleic anhydride modified ethylene homo- or copolymer (D) is present in the flame retardant polymer composition in an amount up to 10 wt.%, more preferably in an amount of 1 to 8 wt.%, and most preferably in an amount of 2.0 to 6 wt.% of the total polymer composition.

The maleic anhydride modified ethylene homo- or copolymer (D) preferably has a melt flow rate MFR (190°C, 2.16 kg) of 0.1 to 5.0 g/10 min, more preferably of 0.5 to 4.0 g/10 min, and most preferably of 1.0 to 2.5 g/10 min.

The polymer composition of the invention may further comprises an ethylene copolymer (E) having a density between 0.912 and 0.940 g/cm³, preferably between 0.912 and 0.930 g/cm³ and more preferably between 0.915 and 0.920 g/cm³. Preferably the ethylene copolymer (E) comprises comonomer units derived from C₄ to C₈ α-olefin, more preferably the comonomers units consist of one or more comonomer units derived from C₄ to C₈ α-olefin.

Preferably the ethylene copolymer (E) is prepared by low pressure polymerization. The ethylene copolymer (E) may be prepared in a low pressure polymerization process through the use of a class of highly active olefin catalyst known as metallocenes, preferably, those based on group IV B transition metals, such as zirconium, titanium and hafnium. In a preferred embodiment the ethylene copolymer (E) has a tensile strength of at least 8MPa. A preferred ethylene copolymer (E) is linear low density polyethylene.

Preferably the ethylene copolymer (E) is present in an amount between 1 and 7 wt% of the total polymer composition, more preferably 2 to 5 wt%.

The composition of the present invention may further comprise a processing aids and/or a drying agent.

Suitable drying agents are for example, silica gel, CaO, CaSO₄, molecular sieves. Preferably CaO is employed as drying agent. Preferably a drying agent is present in the composition in an amount of 0.01 to 2 wt%, more preferably between 0.05 to 1 wt%, most preferably between 0.1 to 0.7 wt% of the total polymer composition.

Suitable processing aids are the ones well known in the art, such as for example, low molecular weight polypropylenes. Preferably a metallocene catalyst based polypropylene wax is used as processing aid. Preferably a processing aid is present in the composition in an amount of 0.01 to 10 wt%, more preferably between 0.05 to 7 wt%, most preferably between 1 to 5 wt% of the total polymer composition.

In addition to the above described components, the inventive compositions may also contain additional conventional additives such as, for example, antioxidants and UV stabilizers, in small amounts. Said additives are usually present in an amount of not more than 5.0 wt%, preferably not more than 3.0 wt% and more preferably not more than 1.0 wt% of the total composition. As antioxidant, sterically hindered or semi-hindered phenols, aromatic amines, aliphatic sterically hindered amines, organic phosphates, thio compounds, and mixtures thereof, may be used.

The flame retardant composition, according to the present invention, may be used in many diverse applications and products. The compositions can for example be moulded, extruded or otherwise formed into mouldings, sheets and fibers.

From the polymer composition of the present invention, a multilayered article can be prepared wherein at least one layer comprises said polymer composition. Preferably, the multilayered article is a wire or cable. Preferably the wire or cable comprises a jacketing layer comprising the composition described above. Preferably said wire or cable is used in a building construction.

In the context of the present invention, a wire or cable is defined to be a cable transferring energy operating at any voltage. The voltage applied to the cable can be alternating (AC), direct (DC), or transient (impulse). According to one embodiment of the present invention the multilayered article is a wire or cable operating at voltages lower than 1 kV, preferably the multilayered article is a cable to be used in building constructions.

The flame retardant polymer composition according to the invention is preferably prepared by mixing together the components by using any suitable means such as conventional compounding or blending apparatus, e.g. a Banbury Mixer, a 2-roll rubber mill or a twin screw extruder, Buss co-kneader.

While usually the compounding temperature is typically in a range of 120°C to 200°C and not higher to avoid decomposition of the flame retardant filler, the polymer composition of the present invention allows reaching a compounding temperature up to 235°C.

The flame retardant polymer composition according to the invention is preferably extruded to form a flame retardant layer of a wire or cable. This is preferably done at a line speed of at least 20 m/min, more preferably at least 50 m/min. The pressure used for the extrusion is 50 to 500 bar.

When producing a power cable by extrusion, the polymer composition can be applied onto the metallic conductor and/or at least one coating layer thereof, e.g. a semiconductive layer or insulating layer.

Test specimens prepared with the flame retardant polymer composition of the present invention shows good mechanical properties.

In particular not aged specimens feature good mechanical properties expressed in a tensile strength higher than 10 Mpa and an elongation at break higher than 125%

Said specimens feature at the same time good flame retardancy, e.g. in the limiting oxygen index (LOI).

The LOI, which is a measure of ease of extinction, is a measure of a product's flame resistance. LOI is a measure of the minimum oxygen concentration of an O₂/N₂ mixture required to sustain combustion for a minimum of 3 minutes or not propagate more than 5 cm from the top of the test specimen.

A high LOI value means that a high percentage of oxygen is needed to sustain combustion, i.e. the compound has a good flame resistance. The LOI value for a flame retardant composition should be at least 22 and higher values are desirable. The composition of the present invention feature LOI value higher than 28%, or higher than 30%.

Test specimens prepared with the flame retardant polymer compositions of the present invention surprisingly also show excellent pressure resistance with indentation value well below 50%, preferably below 30%, when undergoing a hot pressure test for 6h at 80°C.

### Examples

### Measurement methods

### a) Melt Flow Rate

The melt flow rate MFR₂ was measured in accordance with ISO 1133 at 190°C and a load of 2.16 kg or at or 150°C and a load of 21.6 kg.

### b) Determination of LOI (limited oxygen index)

LOI was determined using a Stanton Redcroft FTA Flammability Unit by the US standard ASTM D 2863-77 and the ISO 4589.

To determine the LOI value, test specimen of the compound to be evaluated is ignited in an atmosphere of a mixture of nitrogen and oxygen. The content of oxygen in the N₂/O₂ mixture is gradually decreased until the specimen stops burning. The percentage of O₂ in the N₂/O₂ mixture constitutes the compounds LOI value.

The LOI results are based on approximately 10 test specimens of dimension "150 x 6 mm". These are stamped out from a 3 mm thick plate pressed in a Collins press (low pressure (20 bar) at 150°C during one minute followed by high pressure (200 bar) during five minutes at the same temperature). Cooling rate was 10° C/minute under high pressure. The compound is immediately taken from the mixer to the press.

### c) Tensile Properties

Tensile strength and elongation at break was determined according to ISO527-2. Dumb-bell test pieces were prepared according to ISO 527-2, Type 5A, from 2.0 mm thick compression moulded plaques.

For the preparation of compression moulded plaques, the compounds were extruded into thin tapes, using a Brabender Plasti-corder extruder with a film nozzle. The tape had a thickness of 1.5 mm. The temperature profile used was either 160/170/180°C or 180/190/200°C. The extruder speed was 50 rpm.

The extruder tapes were used as material for the compression moulding of plaques. The tapes were stacked in a frame. The thickness of the plaque depends on the consecutive test to be executed (tear strength and pressure test: 1mm; tensile properties: 2 mm). The compounds (tapes) were pressed into plaques in a Collin press at 200 bar at a temperature of 170°C, with the exception of comparative example 2 which was pressed at a temperature of 180°C, during five minutes. Cooling rate was 15°C/minute under high pressure.

The direction of the test species was parallel to the original orientation of the extruded tapes. The elongation at break and tensile strength was conducted at 23°C with an elongation rate of 50 mm/min.

### d) Hot Pressure test /indentation

The pressure test was conducted according to IEC 60811-3-1 at a temperature of 80°C for 6 hours. A 3 mm wire was positioned under the compression moulded plaques prepared according to the description under section c) above.

### e) Density

The densities were measured according to ISO 1183 on compression moulded specimens.

The densities indicated in Table 1 and 2 are taken from the datasheets of the respective compounds.

### f) Melting temperature

The melting temperatures indicated in Table 1 and 2 are taken from the datasheets of the respective compounds.

### Example 1-4 (EX1-EX4)

For compounding a 375 ml lab internal mixer from Brabender PLE 651 was used. The compound was produced with 40 rpm and with a preheating temperature of 100°C. First all the polymers and the metallocene catalyst based propylene wax in the wt% ratio of the total composition as indicated in Table 1 were put into the internal mixer. Then the mixture was batched for a few seconds. After, the filler, the drying agent and the antioxidant were added in the wt% ratio of the total composition as indicated in Table 1. The compound was mixed up to 150°C.

In the composition of Example 1 EBA (ethylene butyl acrylate copolymer) is used as component (A) instead of the EVA (ethylene methyl acrylate copolymer) of Examples 2-4. The composition of Example 3 has a higher amount of EVA and a lower amount of VLDPE (B), whereas a maleic anhydride grafted linear low density polyethylene Maleic acid anh. Grafted PE) (D) and the coated Huntite/Hydromagnesite filler is present in the same amounts in all the compositions.

VLDPE stands for very low density ethylene copolymer and corresponds to component (B.) In particular VLDPE is an ethylene octene copolymer.

LLDPE stands for linear low density ethylene copolymer and corresponds to component (E). In particular LDPE is a C₄ Ziegler Natta linear low density ethylene copolymer.

A metallocene catalyst based propylene wax (PP wax) is used as processing aid. Calcium oxide (CaO) is used as drying agent and pentaerythritol tetrakis(3-(3,5-di-tert-butyl-4-hydroxyphenyl)propionate is used as antioxidant (AO).

The same ethylene copolymer (E), processing aid, dry agent and antioxidant are present in the compositions of the Examples.

All the test specimens prepared with the compositions of the Examples 1-4 feature good mechanical, flame retardant and pressure resistance properties as shown in Table 3.

**Table 1**

| **Type** | **Product** | **Melting Temp. °C** | **Density g/cm3** | **EX1 wt%** | **EX2 wt%** | **EX3 wt%** | **EX4 wt%** |
|---|---|---|---|---|---|---|---|
| EMA | Elvaloy 1125 DuPont | 90 | 0.944 | | 18 | 20 | 19 |
| EBA | Lotryl 17BA 04 Arekma | 91 | 0.93 | 18 | | | |
| VLDPE | Exact 8203 ExxonMobil | 72 | 0.882 | 11 | 11 | 9 | 11 |
| LLDPE | LL1004YB ExxonMobil | 121 | 0.918 | 2.50 | 2.50 | 2.50 | 2.50 |
| Maleic anh. Grafted PE | Overac 18302 Arkema | 123 | 0.912 | 3 | 3 | 3 | 3 |
| PP wax | Liocene TP PP 1602 Clariant | | 0.87 | 2 | 2 | 2 | 2 |
| Huntite/Hydroma gnesite filler | Ultracarb LH X 0049 Minelco | | 2.5 | 62.80 | 62.80 | 62.80 | 62.80 |
| CaO | Kezadol PCI Kettlitz | | 2.73 | 0.4 | 0.4 | 0.4 | 0.4 |
| AO | Irganox 1010 Ciba | | | 0.3 | 0.3 | 0.3 | 0.3 |

### Comparative Examples (C1-C5)

For compounding a 375 ml lab internal mixer from Brabender PLE 651 was used. The compound was produced with 40 rpm and with a preheating temperature of 100°C. First all the polymers and the metallocene catalyst based propylene wax in the wt% ratio of the total composition as indicated in Table 2 were put into the internal mixer. Then the mixture was batched for a few seconds. After, the filler, the drying agent and the antioxidant were added in the wt% ratio of the total composition as indicated in Table 2. The compound was mixed up to 150°C.

In the compositions of the Comparative Examples the same amounts of coated Huntite/Hydromagnesite filler and component B are used as in the compositions of the Examples. Three kinds of EBA (ethylene butyl acrylate copolymer) are used in the compositions of the comparative examples as component (A). In C5, a combination of EBA and EVA is used. Maleic anhydride grafted EVA (ethylene methacrylate copolymer) or anhydride grafted EBA (ethylene butyl acrylate copolymer) are used instead of a maleic anhydride grafted PE (polyethylene) in C1-C4.

VLDPE stands for very low density ethylene copolymer and corresponds to component (B.) In particular VLDPE is an ethylene octene copolymer. All the comparative examples include a VLDPE, with the exception of C5.

LLDPE and LDPE correspond to component (E). In particular, LLDPE stands for linear low density ethylene copolymer and it is a C₄ Ziegler Natta linear low density ethylene copolymer. LDPE stands for low density polyethylene and it is a high molecular weight low density polyethylene.

The same processing aid, drying agent and antioxidant as in the compositions of the Examples are added in the composition of the comparative examples.

**Table 2**

| **Type** | **Product** | **Melting Point °C** | **Density g/cm3** | **C1 wt%** | **C2 wt%** | **C3 wt%** | **C4 wt%** | **C5 wt%** |
|---|---|---|---|---|---|---|---|---|
| EBA | Elvaloy 3717 DuPont | 96 | 0.924 | | | | 18 | |
| EBA | Elvaloy 3427 DuPont | 94 | 0.926 | | | | | 20.5 |
| EBA | Lotryl 17BA 04 Arekma | 91 | 0.93 | 18 | 18 | 18.5 | | |
| EVA | Escorene UL00112 ExxonMobil | 96 | 0.936 | | | | | 8 |
| VLDPE | Exact 8203 ExxonMobil | 72 | 0.882 | 11 | 11 | 12 | 11 | |
| LLDPE | LL1004YB ExxonMobil | 121 | 0.918 | 2.5 | 2.5 | | | |
| LDPE | Riblene FC 10 Polimeri Europa | 110 | | | | | | 1.5 |
| Maleic anh. Grafted EVA | Fusabond MC 250D DuPont | | 0.96 | | 3 | 4 | | |
| Maleic anh. Grafted EBA | Fusabond A560 DuPont | 94 | 0.93 | 3 | | | | |
| Maleic ac anh. Grafted EBA | Lotader 3210 Arkema | 107 | 0.94 | | | | 5.5 | |
| Maleic anh. Grafted PE | Fusabond E608 DuPont | 118 | 0.926 | | | | | 5 |
| PP wax | Liocene TP PP 1602 Clariant | | 0.87 | 2 | 2 | 2 | 2 | 1.5 |
| Huntite/Hydro magnesite Filler | Ultracarb LHX0049 Minelco | | 2.5 | 62.8 | 62.8 | 62.8 | 62.8 | 62.8 |
| CaO | Kezadol PCI Kettlitz | | 2.73 | 0.4 | 0.4 | 0.4 | 0.4 | 0.4 |
| AO | Irganox 1010 Ciba | | | 0.3 | 0.3 | 0.3 | 0.3 | 0.3 |

Comparative examples C1-C3 show good flame retardant properties but bad mechanical properties and unsatisfactory hot pressure/indentation test values.

Comparative Example 4 features good flame retardant properties, good tensile strength but still unsatisfactory elongation at break and hot pressure/indentation test values.

Comparative Example 5 features good flame retardant properties, good tensile strength, good hot pressure/indentation test values but unsatisfactory elongation at break.

**Table 3**

| **Property** | **C1** | **C2** | **C3** | **C4** | **C5** | **EX1** | **EX2** | **EX3** | **EX4** |
|---|---|---|---|---|---|---|---|---|---|
| Density [g/cm3] | 1494 | 1485 | 1475 | 1493 | 1480 | 1480 | 1500 | 1502 | 1500 |
| MFI(150°C/21.6) [g/10min] | 12.3 | 8.6 | 8.9 | 16.5 | 6.3 | 8.2 | 4.9 | 5.5 | 5.1 |
| Shore A | 97 | 95 | 96 | 95 | 96 | 94 | 95 | 96 | 97 |
| Shore D | 50 | 50 | 49 | 49 | 53 | 53 | 49 | 50 | 50 |
| LOI [%O₂] | **30** | **31** | **33** | **35** | **38** | **37** | **31** | **36** | **36** |
| **Tensile strength** (no aging) [Mpa] | 9 | 9.9 | 9.9 | **11.1** | **13.3** | **10.8** | **10.1** | **11.8** | **11.5** |
| **Elongation at break** (no aging) [%] | 52 | 80 | 75 | 116 | 108 | **142** | **173** | **192** | **193** |
| **Indentation** (6h at 80°C) [%] | 50 | 50 | 50 | 50 | **9** | **13** | **22** | **23** | **15** |

As demonstrated by the example and the comparative examples only the polymer compositions of the invention feature the required flame retardant properties while having the desired elongation and indentation properties.

## Claims

1. A flame retardant polymer composition comprising:
(A) a high pressure prepared ethylene copolymer comprising polar groups selected from the groups consisting of acrylic acids, methacrylic acids, acrylates, methacrylates, acetates and vinyl ester, in an amount between 15 and 25 wt% of the total polymer composition;
(B) a single site catalyst prepared ethylene copolymer consisting of comonomer units derived from C₄ to C₁₂ α-olefin, having a density between 0.860 and 0.910 g/cm³ measured according to ISO 1183, in an amount between 3 and 20 wt% of the total polymer composition;
(C) a halogen-free mineral filler comprising a huntite and/or hydromagnesite, in an amount between 45 and 70 wt% of the total polymer composition;
(D) a maleic anhydride modified ethylene homo-or copolymer in an amount between 1 and 10 wt% of the total polymer composition; and
(E) a ethylene copolymer (E) having a density between 0.912 and 0.940 g/cm³ measured according to ISO 1183 in an amount between 1 and 7 wt% of the total polymer composition.

2. A composition according to claim 1 wherein the ethylene copolymer (B) consists of comonomer units derived from from C₈ to C₁₂ α-olefin.

3. A composition according to anyone of the preceding claims wherein the polyethylene (B) is present in an amount between 7 and 15 wt% of the total polymer composition.

4. A composition according to anyone of the preceding claims wherein the polyethylene (B) has a density between 0.870 and 0.905 g/cm³ measured according to ISO 1183.

5. A composition according to anyone of the preceding claims wherein the halogen-free mineral filler (C) comprises a mixture of at least 20 wt% of the total polymer composition of huntite and hydromagnesite.

6. A composition according to anyone of the preceding claims wherein the co-monomer of the maleic anhydride modified ethylene homo- or copolymer (D) is an α-olefin.

7. A composition according to anyone of the preceding claims featuring a hot pressure resistance below 50% measured according to IEC 60811-3-1.

8. A wire or cable comprising the composition of anyone of the claims 1 to 7.

9. The wire or cable of claim 8 comprising a jacketing layer comprising the composition of anyone of the claims 1 to 7.

10. The use of the composition of anyone of the claims 1 to 7 in the production of a layer of a wire or a cable.

11. A process for producing the composition of anyone of the claims 1 to 7 comprising compounding the composition at a temperature up to 235°C.

## Patentansprüche

1. Flammhemmende Polymerzusammensetzung, umfassend:
(A) ein durch Hochdruck hergestelltes Ethylencopolymer, das polare Gruppen umfasst, die aus den Gruppen ausgewählt sind, bestehend aus Acrylsäuren, Methacrylsäure, Acrylaten, Methacrylaten, Acetaten und Vinylester, mit einer Menge zwischen 15 und 25 Gew.-% von der gesamten Polymerzusammensetzung;
(B) ein durch einen Single-Site-Katalysator hergestelltes Ethylencopolymer, das aus Comonomereinheiten besteht, die sich von C₄ bis C₁₂ α-Olefin ableiten, und das eine Dichte zwischen 0,860 und 0,910 g/cm³ hat, gemessen gemäß ISO 1183, mit einer Menge zwischen 3 und 20 Gew.-% von der gesamten Polymerzusammensetzung;
(C) einen halogenfreien mineralischen Füllstoff, der ein Huntit und/oder Hydromagnesit umfasst, mit einer Menge zwischen 45 und 70 Gew.-% von der gesamten Polymerzusammensetzung;
(D) ein Maleinsäureanhydrid-modifiziertes Ethylenhomo- oder -copolymer mit einer Menge zwischen 1 und 10 Gew.-% von der gesamten Polymerzusammensetzung; und
(E) ein Ethylencopolymer (E), das eine Dichte zwischen 0,912 und 0,940 g/cm³ hat, gemessen gemäß ISO 1183, mit einer Menge zwischen 1 und 7 Gew.-% von der gesamten Polymerzusammensetzung.

2. Zusammensetzung nach Anspruch 1, wobei das Ethylencopolymer (B) aus Comonomereinheiten besteht, die sich von C₈ bis C₁₂ α-Olefin ableiten.

3. Zusammensetzung nach einem der vorhergehenden Ansprüche, wobei das Polyethylen (B) mit einer Menge zwischen 7 und 15 Gew.-% von der gesamten Polymerzusammensetzung vorliegt.

4. Zusammensetzung nach einem der vorhergehenden Ansprüche, wobei das Polyethylen (B) eine Dichte zwischen 0,870 und 0,905 g/cm³ hat, gemessen gemäß ISO 1183.

5. Zusammensetzung nach einem der vorhergehenden Ansprüche, wobei der halogenfreie mineralische Füllstoff (C) eine Mischung aus Huntit und Hydromagnesit mit mindestens 20 Gew.-% von der gesamten Polymerzusammensetzung umfasst.

6. Zusammensetzung nach einem der vorhergehenden Ansprüche, wobei das Comonomer des Maleinsäureanhydrid-modifizierten Ethylenhomo- oder -copolymers (D) ein α-Olefin ist.

7. Zusammensetzung nach einem der vorhergehenden Ansprüche, die eine Warmdruckbeständigkeit von unter 50 % aufweist, gemessen gemäß IEC 60811-3-1.

8. Leitung oder Kabel, umfassend die Zusammensetzung nach einem der Ansprüche 1 bis 7.

9. Leitung oder Kabel nach Anspruch 8, umfassend eine Ummantelungsschicht, die die Zusammensetzung nach einem der Ansprüche 1 bis 7 umfasst.

10. Verwendung der Zusammensetzung nach einem der Ansprüche 1 bis 7 bei der Herstellung einer Schicht von einer Leitung oder einem Kabel.

11. Verfahren zum Herstellen der Zusammensetzung nach einem der Ansprüche 1 bis 7, umfassend das Compoundieren der Zusammensetzung bei einer Temperatur von bis zu 235 °C.

## Revendications

1. Composition de polymère ignifuge comprenant :
(A) un copolymère d'éthylène préparé à haute pression comprenant des groupes polaires choisis parmi les groupes constitués des acides acryliques, des acides méthacryliques, des acrylates, des méthacrylates, des acétates et de l'ester vinylique, en une quantité située entre 15 et 25 % en poids de la composition de polymère totale ;
(B) un copolymère d'éthylène préparé à l'aide d'un catalyseur à site unique constitué de motifs comonomères dérivés d'une α-oléfine en C₄ à C₁₂, ayant une masse volumique située entre 0,860 et 0,910 g/cm³ mesurée selon la norme ISO 1183, en une quantité située entre 3 et 20 % en poids de la composition de polymère totale ;
(C) une charge minérale sans halogène comprenant une huntite et/ou une hydromagnésite, en une quantité située entre 45 et 70 % en poids de la composition de polymère totale ;
(D) un homo- ou copolymère d'éthylène modifié par de l'anhydride maléique en une quantité située entre 1 et 10 % en poids de la composition de polymère totale ; et
(E) un copolymère d'éthylène (E) ayant une masse volumique située entre 0,912 et 0,940 g/cm³ mesurée selon la norme ISO 1183 en une quantité située entre 1 et 7 % en poids de la composition de polymère totale.

2. Composition selon la revendication 1 dans laquelle le copolymère d'éthylène (B) est constitué de motifs comonomères dérivés d'une α-oléfine en C₈ à C₁₂.

3. Composition selon l'une quelconque des revendications précédentes dans laquelle le polyéthylène (B) est présent en une quantité située entre 7 et 15 % en poids de la composition de polymère totale.

4. Composition selon l'une quelconque des revendications précédentes dans laquelle le polyéthylène (B) a une masse volumique située entre 0,870 et 0,905 g/cm³ mesurée selon la norme ISO 1183.

5. Composition selon l'une quelconque des revendications précédentes dans laquelle la charge minérale sans halogène (C) comprend un mélange d'au moins 20 % en poids de la composition de polymère totale de huntite et d'hydromagnésite.

6. Composition selon l'une quelconque des revendications précédentes dans laquelle le co-monomère de l'homo- ou du copolymère d'éthylène modifié par de l'anhydride maléique (D) est une α-oléfine.

7. Composition selon l'une quelconque des revendications précédentes présentant une résistance sous pression à température élevée inférieure à 50 % mesurée selon la norme IEC 60811-3-1.

8. Fil électrique ou câble comprenant la composition selon l'une quelconque des revendications 1 à 7.

9. Fil électrique ou câble selon la revendication 8 comprenant une couche de gainage comprenant la composition selon l'une quelconque des revendications 1 à 7.

10. Utilisation de la composition selon l'une quelconque des revendications 1 à 7 dans la fabrication d'une couche d'un fil électrique ou d'un câble.

11. Procédé de fabrication de la composition selon l'une quelconque des revendications 1 à 7 comprenant le mélangeage de la composition à une température maximale de 235 °C.
